# EUROPEAN PATENT APPLICATION

(11) **EP 4 123 772 A1**
(43) Date of publication of application: **25.01.2023**
(21) Application number: 21770980.7
(22) Date of filing: 17.03.2021
(51) Int. Cl.: H01M 10/04, H02J 7/00

(54) **BACKPACK POWER SUPPLY ASSEMBLY**

(30) Priority: 17.03.2020 CN 202020332921 U; 16.12.2020 CN 202011490560
(71) Applicant: Positec Power Tools (Suzhou) Co., Ltd., Suzhou, Jiangsu 215123 (CN)
(72) Inventor: WANG, Liangjun, Suzhou, Jiangsu 215123 (CN); ZHAI, Deshan, Suzhou, Jiangsu 215123 (CN)
(74) Representative: Dentons UK and Middle East LLP
(86) International application number: PCT/CN2021/081326
(87) International publication number: WO 2021/185283

(57) **Abstract**

A backpack power supply assembly (100), which is used for supplying electric energy to an electric tool, and includes a housing (10), a backpack apparatus used for being worn by an operator and connected to the housing (10), and several battery packs removably connected to the housing (10) through a plugging action. The several battery packs include at least a first battery pack (201), a second battery pack (202) and a third battery pack (203), and the first battery pack (201) is at least partially overlapped with the second battery pack (202) in a plugging direction, and is at least partially overlapped with the third battery pack (203) in a direction perpendicular to the plugging direction.

## Description

This application claims priority to Chinese Patent Application No. 202020332921.9 filed on March 17, 2020 and Chinese Patent Application No. 202011490560.1 filed on December 16, 2020, which are incorporated herein by reference in their entireties.

### BACKGROUND

### Technical Field

Embodiments of the present invention relates to a backpack power supply assembly.

### Related Art

A backpack power supply assembly is configured to be carried by a user and supply electric energy to an electric tool. The electric tool may be a hand-held hair dryer, a high-pressure cleaner, and the like. The backpack power supply assembly is configured to supply power to the electric tool to satisfy a usage requirement for operation of the electric tool for a long time. Generally, a plurality of battery packs are mounted to a housing of the backpack power supply assembly, the battery pack and the housing are connected by an electrical connector to achieve electrical connection, and the battery pack is detachable relative to the housing to charge or replace the battery pack. At present, battery packs are arranged in a column, in other words, when carried by a user, the battery packs are arranged in a column in the battery packs. However, this method has the following problems. Since the battery packs are arranged in a column, a vertical size of the housing of the backpack power supply assembly is excessively large, resulting in a uncoordinated overall dimension and a higher center of gravity, which does not facilitate piggybacking and standing.

### SUMMARY

Embodiments of the present invention is intended to provide a backpack power supply assembly suitable for an operator to piggyback.

In order to achieve the above objective, embodiments of the present invention provides the following technical solutions. A backpack power supply assembly is configured to supply electric energy to an electric tool. The backpack power supply assembly comprises a housing, a backpack apparatus configured for an operator to wear and connected to the housing, and a plurality of battery packs removably connected to or disconnected from the housing through plugging or unplugging. The plurality of battery packs comprise at least a first battery pack, a second battery pack, and a third battery pack. The first battery pack at least partially overlaps the second battery pack in a plugging/unplugging direction and at least partially overlaps the third battery pack in a direction perpendicular to the plugging/unplugging direction.

Compared with the prior art, a vertical size of the housing of the backpack power supply assembly is reduced by at least half, so that a coordinated overall proportion of the backpack power supply assembly is realized, which facilitates piggybacking and standing. The most important thing is that through this arrangement, the plurality of packs are compact and have small overall size, which are suitable for an operator to piggyback.

Further, at least two of the plurality of battery packs have a same plugging/unplugging direction.

Further, at least two of the plurality of battery packs have a same plugging direction.

Further, at least two of the plurality of battery packs have opposite plugging directions.

Further, on a plane perpendicular to the plugging/unplugging direction, a ratio of an overlapping region of a projection of the first battery pack and a projection of the second battery pack to a projection region of the first battery pack or the second battery pack is greater than or equal to 50%.

Further, on a plane parallel to the plugging/unplugging direction, a ratio of an overlapping region of a projection of the first battery pack and a projection of the third battery pack to a projection region of the first battery pack or the third battery pack is greater than or equal to 50%.

Further, the plugging/unplugging direction is perpendicular to a longitudinal extending direction of the housing.

Further, the plugging/unplugging direction is parallel to a longitudinal extending direction of the housing.

Further, the backpack power supply assembly further comprises a flippable cover configured on the housing, a battery cavity configured to accommodate the plurality of battery packs is formed by the housing and the flippable cover, and the flippable cover moves relative to the housing to open or close the battery cavity.

Further, a side of the flippable cover is pivotally connected to the housing, and the flippable cover rotates relative to the housing to open or close the battery cavity.

Further, the flippable cover comprises at least a first flippable cover and a second flippable cover, and the first flippable cover and the second flippable cover have a same rotation axis.

Further, a first battery cavity configured to accommodate the plurality of battery packs is formed by the housing and the first flippable cover, a second battery cavity configured to accommodate the plurality of battery packs is formed by the housing and the second flippable cover, and the battery pack accommodated in the first battery cavity and the battery pack accommodated in the second battery cavity have opposite plugging directions.

Further, a rotation axis of the flippable cover is perpendicular to a longitudinal extension axis of the housing.

Further, a rotation angle of the flippable cover relative to the housing is in a range of 35 degrees to 90 degrees.

Embodiments of the present invention further provides a housing comprising a plurality of battery pack interfaces. A battery pack can be removably connected to or disconnected from the battery pack interface through plugging or unplugging. The plurality of battery pack interfaces comprise at least a first battery pack interface, a second battery pack interface, and a third battery pack interface. The first battery pack interface at least partially overlaps the second battery pack interface in a plugging/unplugging direction and at least partially overlaps the third battery pack interface in a direction perpendicular to the plugging/unplugging direction.

The plurality of battery pack interfaces on the housing are arranged as above, so that the plurality of battery pack interfaces are compactly arranged, and the housing is small in size, which facilitates storage and carrying.

The foregoing description is merely an overview of the technical solutions of embodiments of the present invention. To understand the technical solutions of embodiments of the present invention more clearly, implementation can be performed according to the content of the specification. Description is provided below in detail by using preferred embodiments of the present invention and with reference to the accompanying drawings.

### BRIEF DESCRIPTION OF THE DRAWINGS

FIG. 1 is a schematic structural diagram of a backpack power supply assembly in one of embodiments of the present invention. FIG. 2 is a schematic structural diagram of the backpack power supply assembly shown in FIG. 1 with a flippable cover opened.
FIG. 3 is a schematic structural diagram of a housing of the backpack power supply assembly shown in FIG. 1.
FIG. 4 is a schematic diagram of the backpack power supply assembly shown in FIG. 1 without showing a flippable cover.
FIG. 5 is a schematic diagram of the backpack power supply assembly shown in FIG. 4 with two battery packs being withdrawn.
FIG. 6 is a schematic structural diagram of the backpack power supply assembly shown in FIG. 1 with a flippable cover not opened.
FIG. 7 is a cross-sectional view taken along line A-A in FIG. 1.
FIG. 8 is a schematic structural diagram of a backpack power supply assembly in one of embodiments of the present invention.
FIG. 9 is a schematic diagram of the backpack power supply assembly shown in FIG. 8.
FIG. 10 is a schematic diagram of the backpack power supply assembly shown in FIG. 8 in another direction.
FIG. 11 to FIG. 17 are schematic diagrams showing arrangement of battery packs of a backpack power supply assembly in different embodiments.

### DETAILED DESCRIPTION

The technical solutions of embodiments of the present invention are clearly and completely described in the following with reference to the accompanying drawings. Apparently, the described embodiments are some rather than all of the embodiments of the present invention. All other embodiments obtained by a person of ordinary skill in the art based on the embodiments of the present invention without creative efforts shall fall within the protection scope of embodiments of the present invention.

In the description of embodiments of the present invention, it should be noted that orientation or position relationships indicated by the terms such as "center", "on", "below", "left", "right", "vertical", "horizontal", "inside", and "outside" are based on orientation or position relationships shown in the accompanying drawings, and are used only for ease and brevity of illustration and description of embodiments of the present invention, rather than indicating or implying that the mentioned apparatus or component needs to have a particular orientation or needs to be constructed and operated in a particular orientation. Therefore, such terms should not be construed as limiting of embodiments of the present invention. In addition, terms "first", "second" and "third" are only used to describe the objective and cannot be understood as indicating or implying relative importance.

In the description of embodiments of the present invention, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. Persons of ordinary skill in the art may understand the specific meanings of the foregoing terms in embodiments of the present invention according to specific situations.

In addition, technical features involved in different embodiments of the present invention described below may be combined together if there is no conflict.

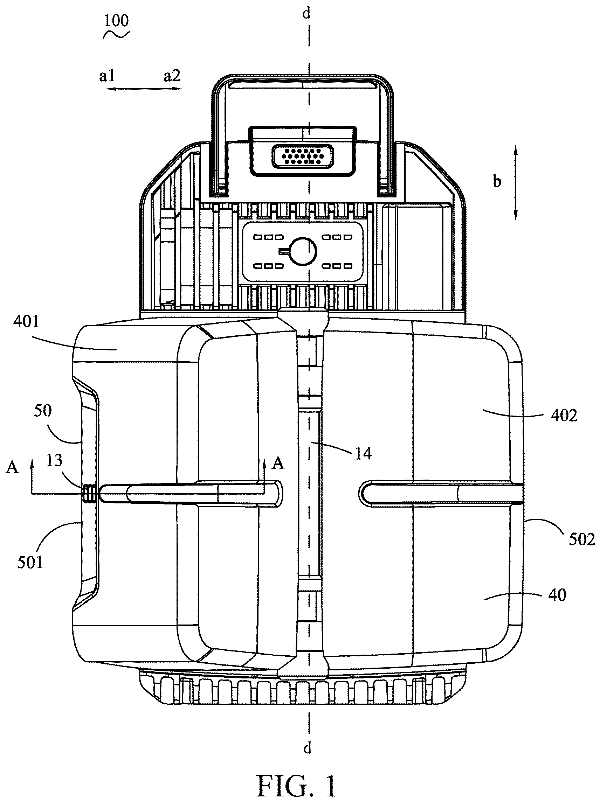

Referring to FIG. 1 to FIG. 3, a backpack power supply assembly 100 shown in one of embodiments of the present invention comprises a housing 10, a backpack apparatus (not shown) configured for an operator to wear and connected to the housing 10, and a plurality of battery packs removably connected to or disconnected from the housing 10 through plugging or unplugging. A manner in which the backpack power supply assembly 100 supplies power to an electric tool may be connecting a pluggable plug between the backpack power supply assembly 100 and the electric tool or arranging a pluggable electrical connection structure between the backpack power supply assembly 100 or a backpack apparatus and the electric tool. In practice, the backpack apparatus may be a strap for wearing or binding, or the backpack apparatus may be a wearing assembly with the strap, which may be mechanically connected to the electric tool.

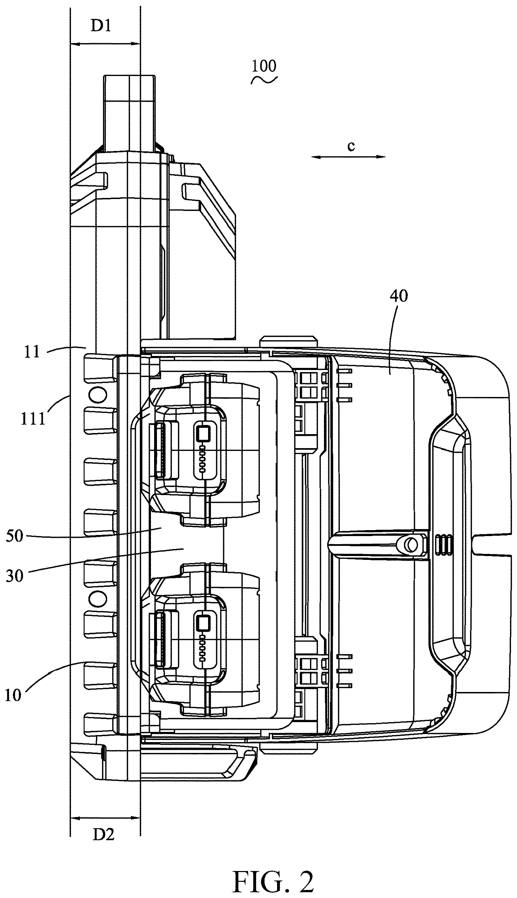

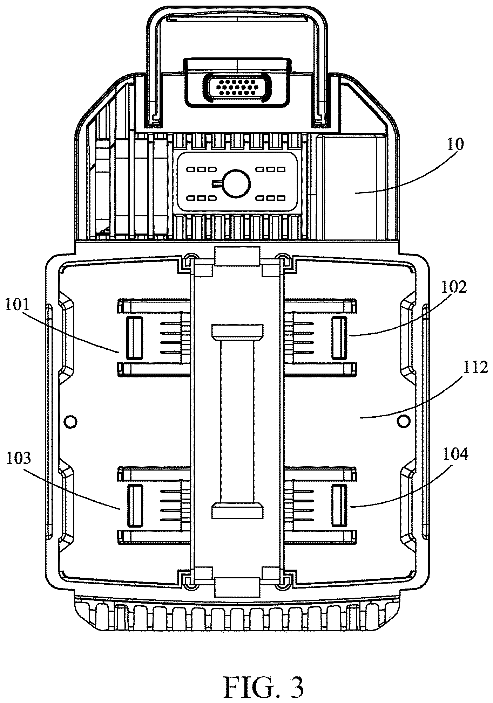

Under a normal circumstance, during operation, the housing 10 is vertically arranged, and a longitudinal extending direction of the housing is a vertical direction and is fixed to a back of an operator by the backpack apparatus. Now an operation state of the backpack power supply assembly 100 is used as a reference direction. A direction of a back side and a front side toward which the operator stands when piggybacking the backpack power supply assembly 100 is used as a front-rear direction (a direction indicated by an arrow c in FIG. 2, where a direction of the front side when standing is the rear), and a height direction of the operator after standing is an up-down direction (the direction indicated by an arrow b in FIG. 1 and FIG. 3). The height direction is a vertical direction, in other words, a longitudinal direction, and a width direction after a person stands is a left-right direction (the direction indicated by an arrow a1-a2 in FIG. 1 and FIG. 3).

Referring to FIG. 2, FIG. 3, and FIG. 5, the housing 10 comprises a back plate 11, and the back plate 11 is partially a hollow structure to accommodate a circuit board. The back plate comprises a back side 111 abutting against the back of the operator or close to the operator and being perpendicular to the ground, and an coupling surface 112 disposed opposite to the back side 111. The back side 111 is generally flat or plane-like. Referring to FIG. 3, a plurality of battery pack interfaces for one-to-one mechanical connection and electrical connection with each battery pack are arranged on the coupling surface 112. The battery pack interface may be a structure commonly used in the prior art, such as a male plug having a metal terminal and a slide rail convenient for the battery packs to be plugged.

The battery pack adopts a structure in the prior art, and details are not described herein. In this embodiment, the plurality of battery packs comprise at least a first battery pack 201, a second battery pack 202, and a third battery pack 203. The first battery pack 201 at least partially overlaps the second battery pack 202 in a plugging/unplugging direction and at least partially overlaps the third battery pack 203 in a direction perpendicular to the plugging/unplugging direction.

Correspondingly, as shown in FIG. 3, the plurality of battery pack interfaces comprise at least a first battery pack interface 101, a second battery pack interface 102, and a third battery pack interface 103. The first battery pack interface is configured to mating the first battery pack 201, the second battery pack interface 102 is configured to mating the second battery pack 202, and the third battery pack interface 103 is configured to mating the third battery pack. The first battery pack interface at least partially overlaps the second battery pack interface 102 in a plugging/unplugging direction and at least partially overlaps the third battery pack interface in a direction perpendicular to the plugging/unplugging direction. The plugging/unplugging direction comprises a plugging direction and an unplugging direction. The plugging direction is a direction in which the battery pack is plugged relative to the battery pack interface, so as to realize mechanical connection and electrical connection between the battery pack and the battery pack interface. The unplugging direction is a direction in which the battery pack is extracted relative to the battery pack interface, so that the mechanical connection and electrical connection between the battery pack and the battery pack interface are unplugged. In this way, a coordinated overall proportion of the housing is realized, facilitating piggybacking and standing.

Further, on a plane perpendicular to the plugging/unplugging direction, a ratio of an overlapping region of a projection of the first battery pack 201 and a projection of the second battery pack 202 to a projection region of the first battery pack 201 or the second battery pack 202 is greater than or equal to 50%. On a plane parallel to the plugging/unplugging direction, a ratio of an overlapping region of a projection of the first battery pack 201 and a projection of the third battery pack 203 to a projection region of the first battery pack 201 or the third battery pack 203 is greater than or equal to 50%. In this way, the first battery pack 201, the second battery pack 202, and the third battery pack 203 are arranged more compactly, and a more coordinated overall proportion is realized, so that the operator is more comfortable in piggybacking.

Further, at least two of the plurality of battery packs have a same plugging/unplugging direction. In this embodiment, plugging/unplugging directions of the first battery pack 201, the second battery pack 202, and the third battery pack 203 are all the same. The plugging/unplugging directions of at least two battery packs are the same, so as to resolve the problem of inconvenient plugging/unplugging caused by inconsistent plugging/unplugging directions in the prior art, which is convenient for the operator to plug or unplug the battery pack.

In other embodiments, the plurality of battery packs may also be arranged to be plugged and unplugged in different directions. For example, the plurality of battery packs are divided into two sets. The plugging/unplugging direction of one of the two sets is different from the plugging/unplugging direction of the other set of battery packs, for example, the plugging/unplugging directions are arranged perpendicular to each other or at an angle to each other. In other embodiments, when three or more sets are arranged, the plugging/unplugging directions of some battery pack sets may be arranged to be the same, or the plugging/unplugging directions of all battery pack sets are all the same, or the plugging/unplugging directions of all battery pack sets are all different. Details are not described herein.

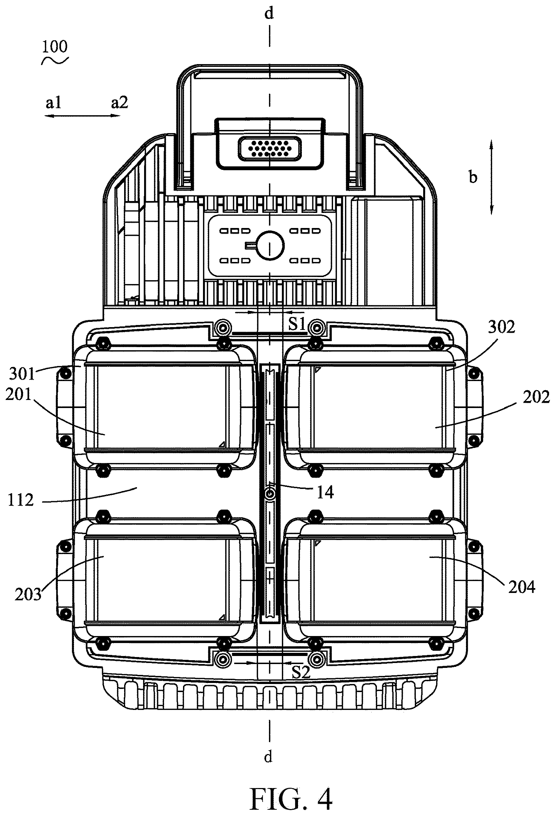

In order to facilitate the plugging/unplugging, at least two of the plurality of battery packs have a same plugging direction. Optionally, the battery packs arranged on a same side of the housing 10 have a same plugging direction. As shown in FIG. 4, the first battery pack 201 and the third battery pack 203 have a same plugging direction. Certainly, the first battery pack 201 also has a same unplugging direction as the third battery pack 203.

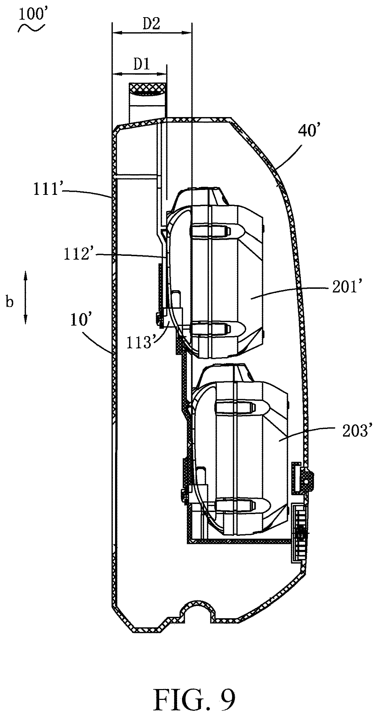

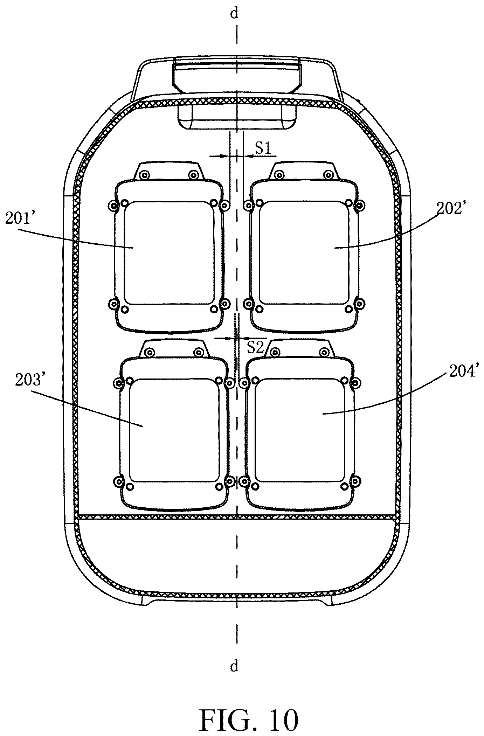

Optionally, at least two of the plurality of battery packs have opposite plugging directions. Optionally, the battery packs arranged on opposite sides of the housing 10 have opposite plugging directions. Still referring to FIG. 4, the first battery pack 201 and the third battery pack 202 have opposite plugging directions. Certainly, the first battery pack 201 and the second battery pack 202 also have opposite unplugging. Further, in this embodiment, the plugging/unplugging direction (a direction indicated by an arrow a1-a2 in FIG. 4) is perpendicular to a longitudinal extending direction (a direction indicated by an arrow b in FIG. 4) of the housing 10, so that a vertical size of the housing 10 is further reduced. Through this arrangement, the battery packs are compactly arranged, small in overall size, and suitable for the operator to piggyback. In this way, the battery pack can be plugged and unplugged along a direction perpendicular to a longitudinal axis of the housing 10, which can effectively reduce the longitudinal size of the housing 10 and is convenient for the operator to piggyback. Certainly, in other embodiments, the plugging/unplugging direction may also be parallel to the longitudinal extending direction of the housing 10, as shown in FIG. 9 and FIG. 10. Alternatively, the battery pack and the longitudinal extension axis of the housing 10 are arranged at an acute angle or an obtuse angle, so as to reduce a width size of the housing 10.

In this embodiment, four battery packs are arranged. The four battery packs are respectively a first battery pack 201, a second battery pack 202, a third battery pack 203, and a fourth battery pack 204. The first battery pack 201 and the second battery pack 202 as well as the third battery pack 203 and the fourth battery pack 204 are respectively arranged opposite to each other along the left-right direction of the housing, and the first battery pack 201 and the third battery pack 203 as well as the second battery pack 202 and the fourth battery pack 204 are respectively arranged at intervals along the up-down direction of the housing. The plugging direction and the unplugging direction of the first battery pack 201 are the same as the plugging direction and the unplugging direction of the third battery pack 203. In other words, the first battery pack and the third battery pack are both plugged along a direction perpendicular to the longitudinal axis of the housing 10 from an outside of the housing toward an inside of the housing, in other words, plugged along the direction indicated by the arrow a2, and are both unplugged along the direction perpendicular to the longitudinal axis of the housing 10 from the inside of the housing to the outside of the housing, in other words, unplugged along the direction indicated by the arrow a1. Similarly, the plugging direction and the unplugging direction of the second battery pack 202 are the same as the plugging direction and the unplugging direction of the fourth battery pack 204. In other words, the second battery pack and the fourth battery pack are both plugged along a direction perpendicular to the longitudinal axis of the housing 10 from an outside of the housing toward an inside of the housing, in other words, plugged along the direction indicated by the arrow a1, and are both unplugged along the direction perpendicular to the longitudinal axis of the housing 10 from the inside of the housing to the outside of the housing, in other words , unplugged along the direction indicated by the arrow. Therefore, the plugging directions of the first battery pack 201 and the third battery pack 203 are opposite to the plugging directions of the second battery pack 202 and the fourth battery pack 204, and the unplugging directions of the first battery pack 201 and the third battery pack 203 are opposite to the unplugging directions of the second battery pack 202 and the fourth battery pack 204. Through such arrangement, the plugging/unplugging among the plurality of battery packs does not interfere with each other, the operator may simultaneously complete the plugging/unplugging of the plurality of battery packs, and the operation is more convenient and quicker.

In this embodiment, the plurality of battery packs are arranged into two sets. Each set of battery packs are arranged in a column, so that the vertical size of the housing 10 is relatively small, and a coordinated overall proportion of the backpack power supply assembly 100 is realized, facilitating piggybacking and standing. The plugging/unplugging directions of all battery packs in a same set are the same in such a way that the problem of inconvenient plugging/unplugging caused by inconsistent plugging/unplugging directions in the prior art is resolved, which is convenient for the operator to plug or unplug the battery packs. In order to facilitate the plugging/unplugging, the plurality of battery packs are arranged in a first battery pack set and a second battery pack set arranged opposite to each other, and the plugging directions of battery packs in the first battery pack set are opposite to the plugging directions of battery packs in the second battery pack set. In this embodiment, the first battery pack set comprises a first battery pack 201 and a second battery pack 202, and the second battery pack set comprises a third battery pack 203 and a fourth battery pack 204. It should be noted that, in this embodiment, the battery packs in the two sets are arranged in two columns parallel to each other. In other embodiments, when more than two columns of battery pack sets are arranged, some battery pack sets may also be arranged to intersect with each other. In other words, the two columns of battery packs are arranged in a large column, and the plugging/unplugging direction of one of two sets in the large column is opposite to the plugging/unplugging direction of the other set of battery packs, or the plugging/unplugging direction of the two sets of battery packs are also correspondingly at an angle. Through this arrangement, the size of the housing 10 can be reduced in a transverse direction.

Referring to FIG. 1 and FIG. 2, the backpack power supply assembly 100 further comprises a flippable cover 40 arranged on the housing 10. The housing 10 and the flippable cover 40 form a battery cavity 30 configured to accommodate the plurality of battery packs. The plurality of battery pack interfaces are arranged within the battery cavity 30. The flippable cover 40 moves relative to the housing 10 to open or close the battery cavity 30 to realize plugging/unplugging of the battery packs. As shown in FIG. 1, the flippable cover 40 is arranged to pivot relative to the housing 10, and a rotation angle of the flippable cover 40 relative to the housing 10 is in a range of 35 degrees to 90 degrees. A too large rotation angle causes the flippable cover to occupy larger space after being opened, and a too small rotation angle causes the flippable cover not to be opened to realize the plugging/unplugging of the battery packs. Certainly, in other embodiments, the flippable cover 40 may further be arranged in other forms such as translation relative to the housing 10. The flippable cover 40 may realize dustproof and waterproof functions, which helps protect the battery pack 20 and makes the appearance more beautiful.

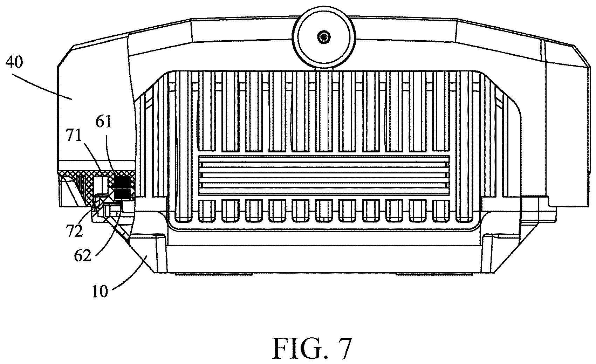

An opening 50 is provided on a side of the housing 10, the flippable cover 40 covers the opening 50, and the battery pack is plugged into the battery cavity 30 or unplugged from the battery cavity 30 through the opening 50. A side of the flippable cover 40 is pivotally connected to the housing 10, and an other side of the flippable cover is adsorbed and connected to the housing 10 by a magnetic structure (not shown). Specifically, referring to FIG. 7, the magnetic structure comprises a first magnetic member 61 embedded in the flippable cover 40 and a second magnetic member 62 embedded in the housing 10. The first magnetic member 61 and the second magnetic member 62 have opposite magnetic poles. The first magnetic member 61 is arranged in the middle of an outer side edge of the flippable cover 40. In other embodiments, the first magnetic member 61 or the second magnetic member 62 may also be arranged to be made of a ferromagnetic material. In order to improve sealing performance, the flippable cover 40 and the housing 10 have sealing members 71 and 72. The first magnetic member 61 and the second magnetic member 62 are respectively embedded in the sealing members 71 and 72. In addition, in other embodiments, the magnetic structure may not be used, for example, other common connection methods such as snap-fitting are used, and details are not described herein again.

The flippable cover 40 comprises at least a first flippable cover 401 and a second flippable cover 402. Referring to FIG. 1 and FIG. 2, specifically, the opening 50 comprises a first plugging/unplugging port 501 and a second plugging/unplugging port 502. The first flippable cover 401 covers the first plugging/unplugging port 501, and the second flippable cover 402 covers the second plugging/unplugging port 502. The first battery pack 201 and the third battery pack 203 are plugged into or unplugged from the first plugging/unplugging port 501, and the second battery pack 202 and the fourth battery pack 204 are plugged into or unplugged from the second plugging/unplugging port 502. The first flippable cover 401 and the second flippable cover 402 have a same shape and size, so that the first flippable cover 401 and the second flippable cover 402 can be interchangeably mounted. In other words, the first flippable cover 401 may be mounted to a position where the second flippable cover 402 is mounted, and the second flippable cover 402 may also be mounted to a position where the first flippable cover 401 is mounted, thereby saving the mounting time.

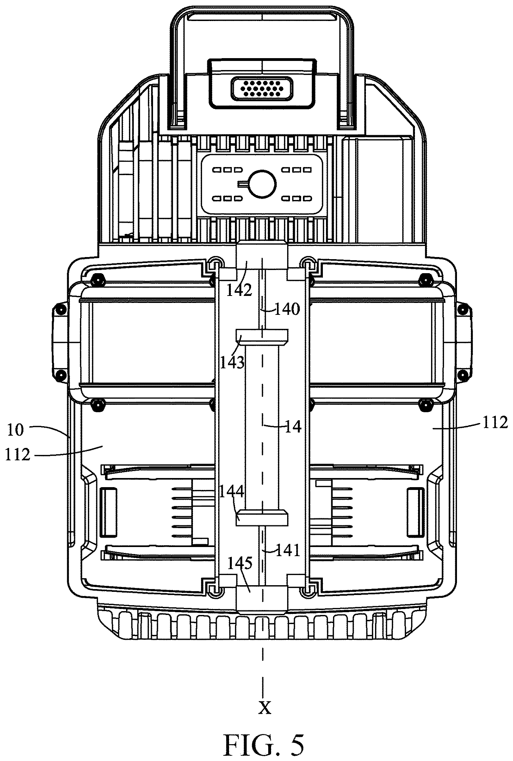

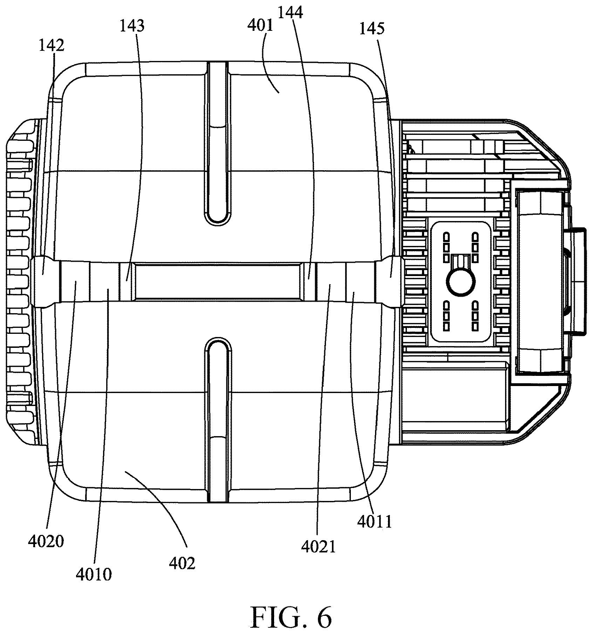

In order to facilitate operation, the pivotal movement of all flippable covers 40 do not interfere with each other, and the first flippable cover and the second flippable cover have a same rotation axis. Referring to FIG. 5 and FIG. 6, a support is mounted to the housing 10, and the first flippable cover 401 and the second flippable cover 402 are both pivotally connected to the support 14. A side of the first flippable cover 401 protrudes from a first lug 4010 and a second lug 4011, and a side of the second flippable cover 402 protrudes from a third lug 4020 and a fourth lug 4021. The first lug 4010, the second lug 4011, the third lug 4020, and the fourth lug 4021 are rotatably mounted to the support 14. The support 14 comprises a first sleeving portion 140, a second sleeving portion 141, a first limiting portion 142 and a second limiting portion 143 on two ends of the first sleeving portion 140, and a third limiting portion 144 and a fourth limiting portion 145 on two ends of the second sleeving portion 141. The first lug 4010 and the third lug 4020 are sleeved on the first sleeving portion 140, and the first limiting portion 142 and the second limiting portion 143 limit axial movement of the first lug 4010 and the third lug on the first sleeving portion 140. The second lug 4011 and the fourth lug 4021 are sleeved on the second sleeving portion 141, and the third limiting portion 144 and the fourth limiting portion 145 limit axial movement of the second lug 4011 and the fourth lug 4021 on the second sleeving portion 141. The first flippable cover 401 and the second flippable cover 402 both rotate around a central axis X of the support 14. In this way, the first flippable cover 401 and the second flippable cover 402 can share the support 14 and the same rotation axis, so as to achieve compact mounting and cause the backpack power supply assembly 100 to occupy a small volume.

The battery cavity 30 comprises a first battery cavity 301 and a second battery cavity 302 on two sides of the support 14. The first flippable cover 401 is closed relative to the housing 10 to close the first battery cavity 301, and the second flippable cover 402 is closed relative to the housing 10 to close the second battery cavity 302. The battery pack arranged in the first battery cavity 301 is plugged into or unplugged from the first plugging/unplugging port 501, and the battery pack arranged in the second battery cavity 302 is plugged into or unplugged from the second plugging/unplugging port 502. Opening directions of the first plugging/unplugging port 501 and the second plugging/unplugging port 502 are opposite. plugging directions of the battery packs accommodated in the first battery cavity 301 and the second battery cavity 302 are opposite. It should be noted that, in this embodiment, only two battery packs are arranged in a battery cavity, while in other embodiments, more battery packs may be arranged in a battery cavity. In this case, a method for unplugging the battery pack may be as follows. The first plugging/unplugging port 501 and the first battery cavity 301 are used as examples for description. A column of battery packs close to the first plugging/unplugging port 501 is preferentially slid out of the first plugging/unplugging port 501, and then a column of battery packs away from the first plugging/unplugging port 501 is unplugged in sequence. When the battery packs in the first battery cavity 301 are mounted, the column of battery packs away from the first plugging/unplugging port 501 is preferentially slid into the battery cavity 30, and then the column of battery packs close to the first plugging/unplugging port 501 are plugged in sequence.

In other embodiments, only one opening 50 may be provided or may be provided on a left side or a right side, in other words, only the first plugging/unplugging port 501 or the second plugging/unplugging port 502 is reserved.

It should be noted that, at least two columns of battery packs are further arranged to form at least two rows arranged in parallel. A distance between two adjacent battery packs in an upper row of the at least two rows is equal to a distance between two adjacent battery packs in a lower row adjacent to the upper row. Though this arrangement, the battery packs in the battery cavity 30 can be arranged more regularly, and space in the battery cavity 30 can be fully utilized, so that the backpack power supply assembly 100 has a smaller volume and can be more conveniently carried by the operator. A distance between the upper battery pack in each column and the back side 111 of the housing 10 is equal to a distance between the lower battery pack and the back side 111 of the housing 10. Though this arrangement, the battery packs in the battery cavity 30 can be arranged more regularly, and space in the battery cavity 30 can be fully utilized, so that the backpack power supply assembly 100 has a smaller volume and is more conveniently carried by the operator.

The four battery packs in this embodiment are used as examples for detailed description. Referring to FIG. 2 and FIG. 4, distances between the first battery pack 201 and the back side 111 of the flippable cover 40 and between the second battery pack 202 and the back side of the flippable cover are both D1, and distances between the third battery pack 203 and the back side 111 of the flippable cover 40 and between the fourth battery pack 204 and the back side of the flippable cover are both D2, where D1 = D2. The first battery pack 201 and the second battery pack 202 are in a left-to-right arrangement, and the third battery pack 203 and the fourth battery pack 204 are in a left-to-right arrangement. A distance between the first battery pack 201 and the second battery pack 203 is S1, and a distance between the third battery pack 203 and the fourth battery pack 204 is S2, where S1 = S2. The first battery pack 201 and the second battery pack 202 are symmetrically arranged along the central axis of the housing 10 (a dashed line d-d in FIG. 1 and FIG. 3 represents the central axis of the housing 10), and the third battery pack 203 and the fourth battery pack 204 are symmetrically arranged along the central axis of the housing 10.

In this embodiment, the arrangement mode of the plurality of battery packs is as follows. 1. A distance between the upper battery pack in each column and the back side 111 of a backpack apparatus is equal to a distance between the lower battery pack and the back side 111 of the backpack apparatus. 2. A distance between two battery packs in an upper row of two rows is equal to a distance between two battery packs in a lower row adjacent to the upper row. But in addition to the arrangement, the following manners may further be used.

First change: A distance between the upper battery pack and the back side 111 of the backpack apparatus in each column is not equal to the distance between the lower battery pack and the back side 111 of the backpack apparatus. Four battery packs are used as an example. For signs of D1 and D2 in FIG. 2, distances between the first battery pack 201 and the back side 111 of the flippable cover 40 and between the third battery pack 203 and the back side of the flippable cover are both D1, and distances between the second battery pack 202 and the back side 141 of the flippable cover 40 and between the fourth battery pack 204 and the back of the flippable cover are both D2, where D1 < D2 or D1 > D2. This arrangement is adapted to the arrangement of battery packs having inconsistent sizes in the battery cavity 30.

Second change: a distance between two adjacent battery packs in the upper row in the two rows is not equal to a distance between two adjacent battery packs in a lower row adjacent to the upper row. Four battery packs are used as an example. For signs of S1 and S2 in FIG. 4, a distance between the first battery pack 201 and the third battery pack 203 in a first row is S 1, and a distance between the second battery pack 202 and the fourth battery pack 204 in a second row is S2, where S1 < S2 or S 1 > S2. However, no matter in this embodiment or a variant solution, a distance S between two adjacent battery packs in a same row may be adjusted according to an actual requirement.

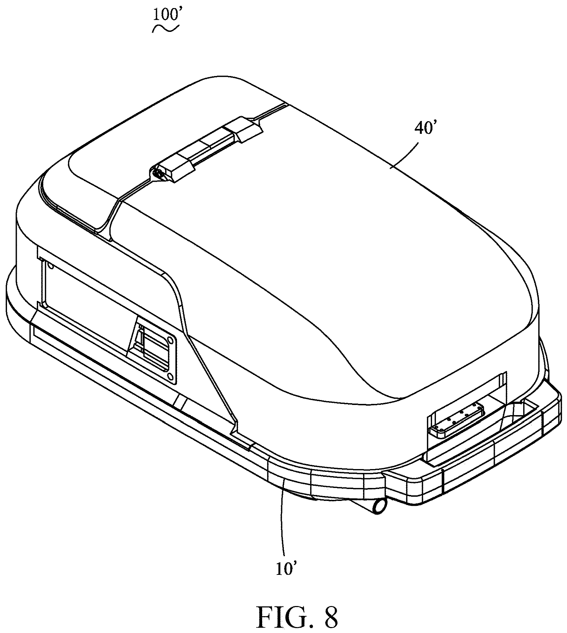

Referring to FIG. 8 to FIG. 10, the backpack power supply assembly is a variant of the backpack power supply assembly 100 shown in the first embodiment, and a difference there between is as follows. 1. Only one battery cavity 30' and one flippable cover 40' are arranged, and all battery packs are arranged in the battery cavity 30'. 2. Only one opening (not numbered) is provided, plugging directions of all battery packs are the same, unplugging directions of all battery packs are the same, and the plugging/unplugging directions of the battery packs are all along a longitudinal extending direction (a direction indicated by an arrow b in FIG. 7) of a housing 10'. 3. The flippable cover 40' is pivotally connected to one side of the housing and snap fitted to the other side of the housing. 4. A rotation axis of the flippable cover 40' is perpendicular to a longitudinal extension axis of the housing.

The above differences are described in detail below. Two sets of battery packs are arranged to form two rows parallel to each other. A distance between two adjacent battery packs in an upper row in the two rows is greater than a distance between two adjacent battery packs in a lower row adjacent to the upper row. Through this arrangement, a space for locking the housing 10' and the flippable cover 40' can be reserved. A distance between the upper battery pack and a back side 111' of the housing 10' in each column is less than a distance between the lower battery pack and the back side 111' of the housing 10', so that a distance between the battery pack in an uppermost row and the back side 111' of the housing 10' is the shortest, and the battery pack in the lower row have a plugging/unplugging space, which facilitates plugging and unplugging of the battery pack in the lower row.

Specifically, a distance between a first battery pack 201' and a second battery pack 202' is S1, and a distance between a third battery pack 203' and a fourth battery pack 204' is S2, where S1 > S2. Distances between the first battery pack 201' and the back side 111' of the housing 10' and between the second battery pack 202' and the back side of the housing are both D1, and distances between the third battery pack 203' and the back side 111' of the housing and between the fourth battery pack 204' and the back side of the housing are both D2, where D1 < D2. The first battery pack 201' and the second battery pack 202' are symmetrically arranged along the central axis of the housing 10' (a dashed line d-d in FIG. 10 represents the central axis of the housing 10'), and the third battery pack 203' and the fourth battery pack 204' are symmetrically arranged along the central axis of the housing 10'. It should be noted that, since D1 and D2 are different, correspondingly, positions of the battery pack interfaces engaged with different battery packs are also different. In other words, positions of the battery pack interfaces 101 and 102 corresponding to the first battery pack 201' and the second battery pack 202' are arranged relatively backward.

In the first embodiment, the plugging/unplugging directions of the two sets of battery packs are opposite, and the opening is located on a side edge. In the second embodiment, the plugging/unplugging directions of the two sets of battery packs are the same, and the opening (not numbered) is provided on an upper side. The plugging/unplugging directions of all sets of battery packs in the second embodiment are the same as the vertical direction (the direction indicated by the arrow b in FIG. 8). However, regardless of the first embodiment or the second embodiment, the operator can easily plug or unplug the battery pack, and there is no need to reserve plugging/unplugging space for adjacent battery pack in the battery cavity 30'. Therefore, the space in the battery cavity 30' can be fully utilized, so that an overall volume of the backpack power supply assembly is reduced, which facilitates piggybacking by the operator.

In the first embodiment and the second embodiment, each set of battery packs are in a column arrangement. As mentioned above, each set of battery packs may further be arranged in a row, and the plugging/unplugging directions of all of the sets of battery packs may be the same or may be different or partially different. When the plugging/unplugging directions are different, in order to satisfy operability of the plugging/unplugging of the battery pack, battery pack interfaces engaged with two adjacent rows of battery packs may be arranged opposite to each other in an up-down direction. Specifically, the battery pack interfaces engaged with two adjacent rows of battery packs are in a mirrored arrangement on two sides along a central axis between the two adjacent rows of battery packs. In other words, the two adjacent rows of battery packs are in a mirrored arrangement, which is also an arrangement opposite to each other. In this design, the plugging/unplugging directions of two adjacent rows of battery packs arranged opposite to each other are opposite. Certainly, in this arrangement, a sufficient space for plugging/unplugging is required to be reserved between the battery packs in the lower row in two adjacent rows of battery packs arranged opposite to each other and the housing or between adjacent battery packs in the lower row in the two adjacent rows of battery packs. For example, in two rows of battery packs, the plugging/unplugging direction of the battery packs in the upper row is upward, and the plugging/unplugging direction of the battery packs in the lower row is downward. Sufficient space for plugging/unplugging of the battery packs in the lower row should be reserved between the battery packs in the lower row and the housing. For another example, for ease of description, four rows of battery packs are named in order from top to bottom: a first row of battery packs, a second row of battery packs, a third row of battery packs, and a fourth row of battery packs. Correspondingly, coupling portions engaged with the first row of battery packs are referred to as a first row of coupling portions, coupling portions engaged with the second row of battery packs are referred to as a second row of coupling portions, coupling portions engaged with the third row of battery packs are referred to as a third row of coupling portions, and coupling portions engaged with the fourth row of battery packs are referred to as a fourth row of coupling portions. In an actual design, the four rows of coupling portions may be combined in pairs to be arranged opposite to each other in an up-down direction. Alternatively, two rows of coupling portions are arranged opposite to each other in the up-down direction. For example, the first row of coupling portions and the second row of coupling portions are arranged opposite to each other in the up-down direction. In this case, the first row of battery packs and the second row of battery packs respectively corresponding to the first row of coupling portions and the second row of coupling portions are arranged opposite to each other in the up-down direction, and the plugging/unplugging directions of the first row of battery packs and the second row of battery packs are opposite. In this case, sufficient space for plugging/unplugging is required to be reserved between the second row of battery packs and the third row of battery packs. In other words, a distance between the second row of battery packs and the third row of battery packs is required to be greater than or equal to a moving distance for plugging/unplugging of the second row of battery packs. Certainly, it should be noted that in the above description, the plugging/unplugging space between the battery pack and the housing or the plugging/unplugging space between the battery packs in the upper row and the battery packs in the lower row is actually a distance between the battery pack interfaces in a corresponding upper row and the housing or between the battery pack interfaces in a corresponding upper row and the battery pack interfaces in the lower row. The distance is the plugging/unplugging space.

In the foregoing backpack power supply assembly, the plurality of battery packs are arranged into at least two sets, and each set of battery packs are arranged in a column or a row, so that the vertical size of the housing is relatively small. Compared with the prior art, the vertical size of the housing is reduced by at least half. Therefore, a coordinated collation proportion of the backpack power supply assembly is realized, facilitating piggybacking and standing. The most important thing is that through this arrangement, the plurality of packs can be compactly arranged and small in size without changing the battery pack, and the overall size can approximate a size of a backpack, which is suitable for the operator to piggyback.

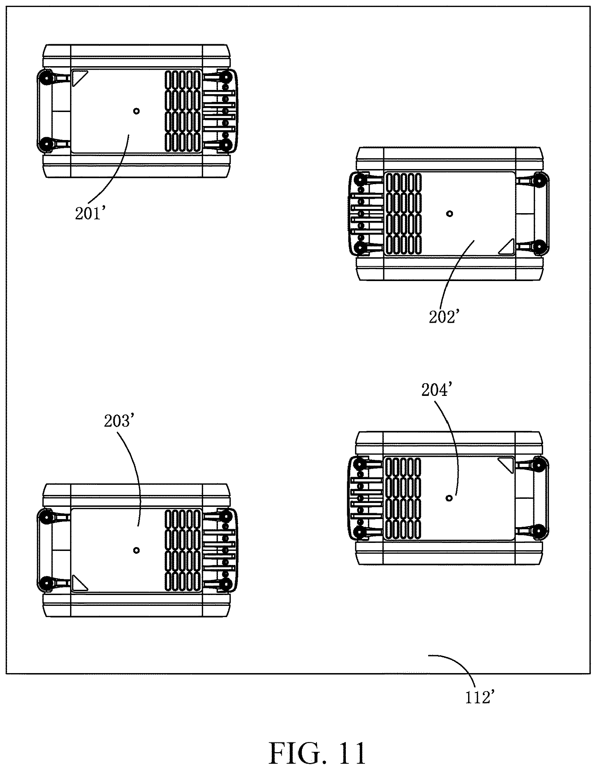

Referring to FIG. 11 to FIG. 17, seven different arrangement modes of battery packs are shown, which are described below one by one.

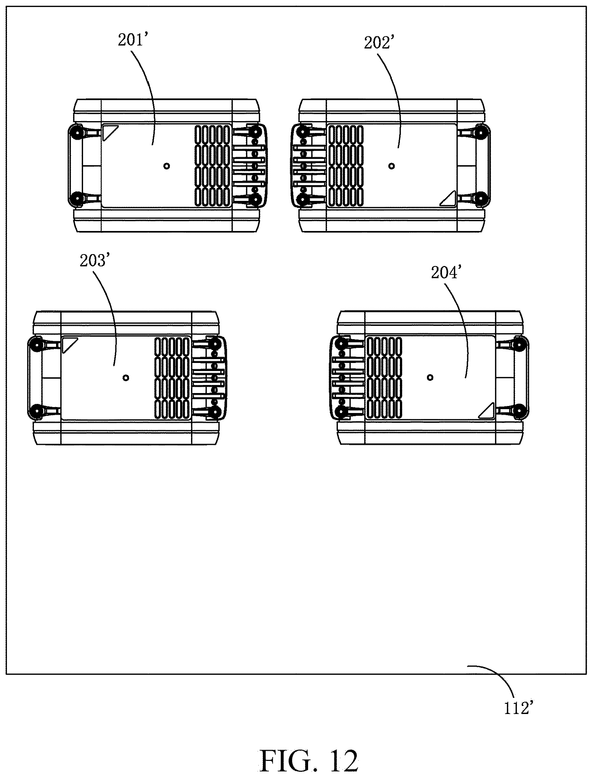

As shown in FIG. 11 and FIG. 12, a plurality of battery packs comprise a first battery pack 201', a second battery pack 202', a third battery pack 203', and a fourth battery pack 204'. Plugging/unplugging directions of the four battery packs are the same as the plugging/unplugging directions of the battery packs in the first embodiment. As shown in FIG. 11, the first battery pack 201' and the third battery pack 203' are arranged in a column, and the second battery pack 202' and the fourth battery pack 204' are arranged in a column. In addition, the first battery pack 201' and the second battery pack 202' at least partially overlap in the plugging/unplugging direction, and the third battery pack 203' and the fourth battery pack 204' at least partially overlap in the plugging/unplugging direction. As shown in FIG. 12, the first battery pack 201' and the second battery pack 202' are arranged in a row, and the third battery pack 203' and the fourth battery pack 204' are also arranged in a row. In addition, the first battery pack 201' and the third battery pack 202' at least partially overlap in a direction perpendicular to the plugging/unplugging direction, and the second battery pack 202' and the fourth battery pack 204' at least partially overlap in a direction perpendicular to the plugging/unplugging direction.

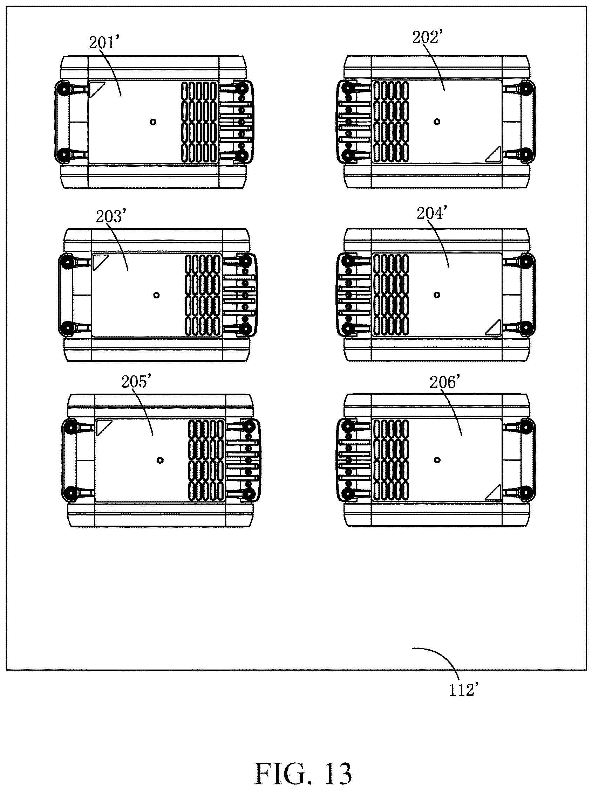

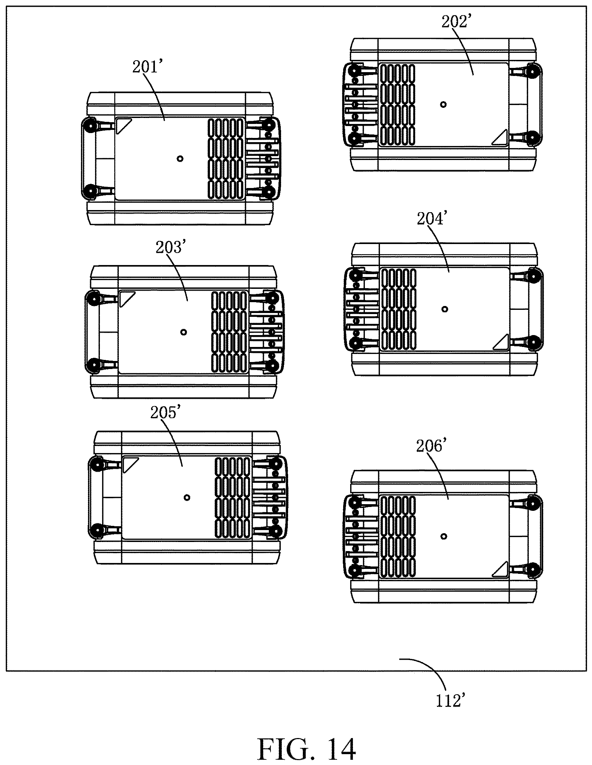

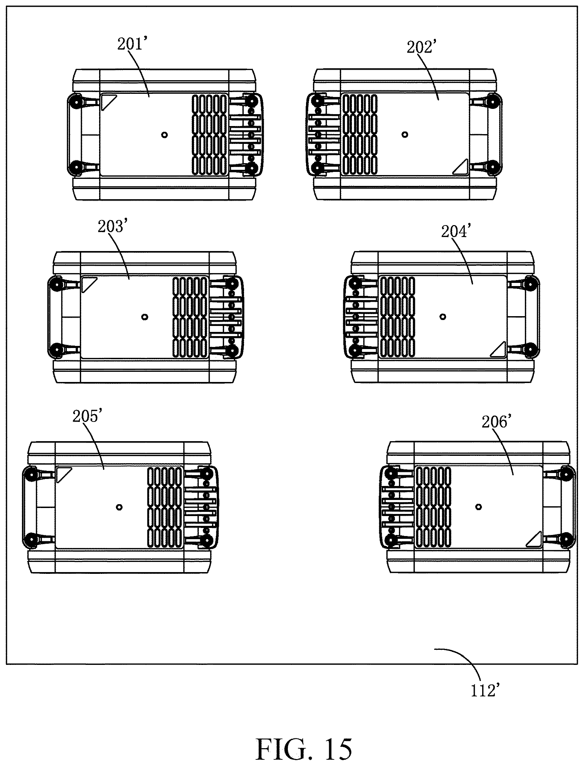

As shown in FIG. 13 to FIG. 15, six battery packs are arranged, comprising a first battery pack 201', a second battery pack 202', a third battery pack 203', a fourth battery pack 204', a fifth battery pack 205', and a sixth battery pack 206'. Plugging/unplugging directions of the six battery packs are the same as the plugging/unplugging directions in the the first embodiment. As shown in FIG. 13, the first battery pack 201', the third battery pack 203', and the fifth battery pack 205' are arranged in a column, and the second battery pack 202', the fourth battery pack 204', and the sixth battery pack 206' are also arranged in a column. In addition, the first battery pack 201' and the second battery pack 202' are arranged in a row, the third battery pack 203' and the fourth battery pack 204' are arranged in a row, and the fifth battery pack 205' and the sixth battery pack 206' are arranged in a row. As shown in FIG. 14, the first battery pack 201', the third battery pack 203', and the fifth battery pack 205' are arranged in a column, and the second battery pack 202', the fourth battery pack 204', and the sixth battery pack 206' are arranged in a column. In addition, the first battery pack 201' and the second battery pack 202' at least partially overlap in the plugging/unplugging direction, the third battery pack 203' and the fourth battery pack 204' at least partially overlap in the plugging/unplugging direction, and the fifth battery pack 205' and the sixth battery pack 206' at least partially overlap in the plugging/unplugging direction. As shown in FIG. 15, the first battery pack 201' and the second battery pack 202' are arranged in a row, the third battery pack 203' and the fourth battery pack 204' are arranged in a row, and the fifth battery pack 205' and the sixth battery pack 206' are arranged in a row. In addition, the first battery pack 201', the third battery pack 203', and the fifth battery pack 205' at least partially overlap in a direction perpendicular to the plugging/unplugging direction, and the second battery pack 202', the fourth battery pack 204', and the sixth battery pack 206' at least partially overlap in a direction perpendicular to the plugging/unplugging direction.

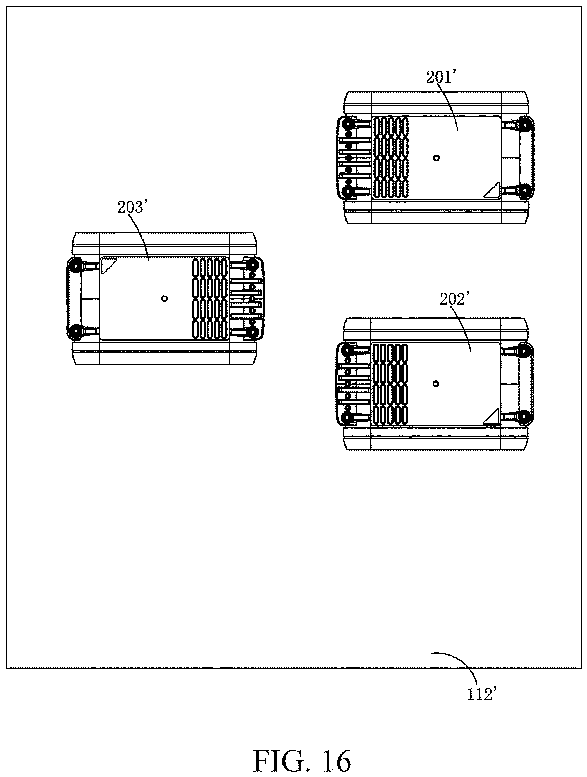

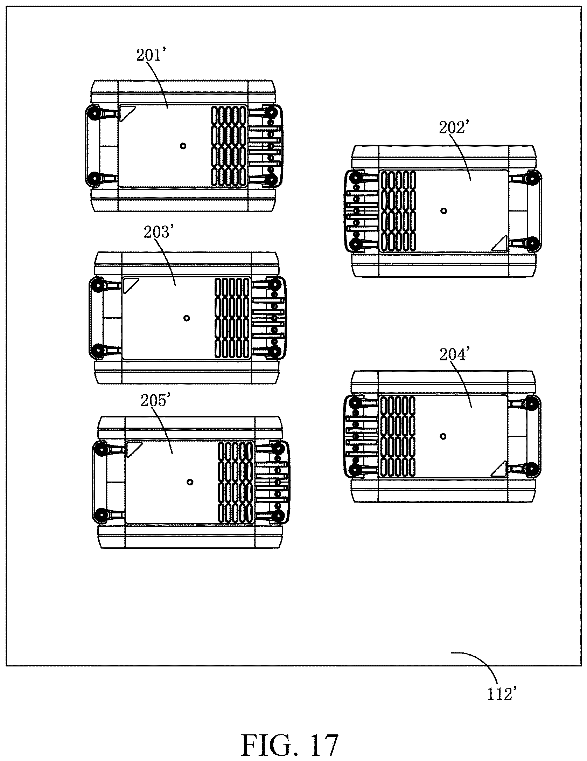

A quantity of battery packs 20 may be an even number or an odd number greater than or equal to 4. As shown in FIG. 16, three battery packs are arranged, comprising the first battery pack 201', the second battery pack 202', and the third battery pack 203'. The first battery pack 201' and the second battery pack 202' are arranged in a column, the first battery pack 201' and the third battery pack 203' at least partially overlap in the plugging/unplugging direction, and the second battery pack 202' also at least partially overlap the third battery pack 203' in the plugging/unplugging direction. As shown in FIG. 17, five battery packs are arranged, comprising the first battery pack 201', the second battery pack 202', the third battery pack 203', the fourth battery pack 204', and the fifth battery pack 205'. The first battery pack 201', the third battery pack 203', and the fifth battery pack 205' are arranged in a column. The first battery pack 201' and the third battery pack 203' at least partially overlap the second battery pack 202' in the plugging/unplugging direction, and the third battery pack 203' and the fifth battery pack 205' at least partially overlap the fourth battery pack 204' in the plugging/unplugging direction.

Although the above arrangement is not as compact as the arrangement of battery packs in FIG. 4 and FIG. 10, the size of the battery pack interface on the housing can also be minimized. Compared with a conventional arrangement in a row or in a column, a lot of space can still be reduced, and this arrangement may further be adapted to mounting of battery packs of different sizes.

The technical features in the above embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments only describe several implementations of the present invention, and their description is specific and detailed, but cannot therefore be understood as a limitation to the patent scope of embodiments of the present invention. A person of ordinary skill in the art may further make some variations and improvements without departing from the concept of embodiments of the present invention, and the variations and improvements belong to the protection scope of embodiments of the present invention. Therefore, the protection scope of the patent of embodiments of the present invention is subject to the appended claims.

## Claims

1. A backpack power supply assembly, configured to supply electric energy to an electric tool and comprising a housing, a backpack apparatus configured for an operator to wear and connected to the housing, and a plurality of battery packs removably connected to or disconnected from the housing through plugging or unplugging, wherein the plurality of battery packs comprise at least a first battery pack, a second battery pack, and a third battery pack, and the first battery pack at least partially overlaps the second battery pack in a plugging/unplugging direction and at least partially overlaps the third battery pack in a direction perpendicular to the plugging/unplugging direction.

2. The backpack power supply assembly according to claim 1, wherein at least two of the plurality of battery packs have a same plugging/unplugging direction.

3. The backpack power supply assembly according to claim 2, wherein at least two of the plurality of battery packs have a same plugging direction.

4. The backpack power supply assembly according to claim 2, wherein at least two of the plurality of battery packs have opposite plugging directions.

5. The backpack power supply assembly according to claim 1, wherein on a plane perpendicular to the plugging/unplugging direction, a ratio of an overlapping region of a projection of the first battery pack and a projection of the second battery pack to a projection region of the first battery pack or the second battery pack is greater than or equal to 50%.

6. The backpack power supply assembly according to claim 1, wherein on a plane parallel to the plugging/unplugging direction, a ratio of an overlapping region of a projection of the first battery pack and a projection of the third battery pack to a projection region of the first battery pack or the third battery pack is greater than or equal to 50%.

7. The backpack power supply assembly according to any of claims 1 to 6, wherein the plugging/unplugging direction is perpendicular to a longitudinal extending direction of the housing.

8. The backpack power supply assembly according to any of claims 1 to 6, wherein the plugging/unplugging direction is parallel to a longitudinal extending direction of the housing.

9. The backpack power supply assembly according to claim 1, further comprising a flippable cover configured on the housing, a battery cavity configured to accommodate the plurality of battery packs is formed by the housing and the flippable cover, and the flippable cover moves relative to the housing to open or close the battery cavity.

10. The backpack power supply assembly according to claim 9, wherein a side of the flippable cover is pivotally connected to the housing, and the flippable cover rotates relative to the housing to open or close the battery cavity.

11. The backpack power supply assembly according to claim 10, wherein the flippable cover comprises at least a first flippable cover and a second flippable cover, and the first flippable cover and the second flippable cover have a same rotation axis.

12. The backpack power supply assembly according to claim 11, wherein a first battery cavity configured to accommodate the plurality of battery packs is formed by the housing and the first flippable cover, a second battery cavity configured to accommodate the plurality of battery packs is formed by the housing and the second flippable cover, and the battery pack accommodated in the first battery cavity and the battery pack accommodated in the second battery cavity have opposite plugging directions.

13. The backpack power supply assembly according to claim 10, wherein a rotation axis of the flippable cover is perpendicular to a longitudinal extension axis of the housing.

14. The backpack power supply assembly according to claim 10, wherein a rotation angle of the flippable cover relative to the housing is in a range of 35 degrees to 90 degrees.

15. A housing, comprising a plurality of battery pack interfaces, a battery pack can be removably connected to or disconnected from the battery pack interface through plugging or unplugging, wherein the plurality of battery pack interfaces comprise at least a first battery pack interface, a second battery pack interface, and a third battery pack interface, and the first battery pack interface at least partially overlaps the second battery pack interface in a plugging/unplugging direction and at least partially overlaps the third battery pack interface in a direction perpendicular to the plugging/unplugging direction.
